# EUROPÄISCHE PATENTSCHRIFT

(11) **EP 3 651 923 B1**
(45) Veröffentlichungstag und Bekanntmachung des Hinweises auf die Patenterteilung: **20.05.2026**
(21) Anmeldenummer: 18782296.0
(22) Anmeldetag: 11.07.2018
(51) Int. Cl.: B23B 51/10, B24B 27/033, B24D 3/00, B23D 79/00

(54) **ENTGRATWERKZEUG**
DEBURRING TOOL
OUTIL D'ÉBAVURAGE

(30) Priorität: 11.07.2017 DE 102017115540
(43) Veröffentlichungstag der Anmeldung: 20.05.2020
(73) Patentinhaber: Gühring KG, 72458 Albstadt (DE); Puttkamer, Ingo, V., 72458 Albstadt (DE); Rebholz, Felix, 72510 Frohnstetten (DE)
(72) Erfinder: PUTTKAMER, Ingo, V., 72510 Frohnstetten (DE); REBHOLZ, Felix, 72510 Frohnstetten (DE)
(74) Vertreter: Winter, Brandl - Partnerschaft mbB
(86) Internationale Anmeldenummer: PCT/DE2018/000212
(87) Internationale Veröffentlichungsnummer: WO 2019/011363

(56) Entgegenhaltungen:
- EP-A1- 0 072 374
- EP-A2- 1 247 615
- DE-U1- 29 615 629
- US-A- 5 938 379
- US-B1- 7 607 871

## Beschreibung

Die Erfindung betrifft ein Entgratwerkzeug zum Entgraten oder Senken zumindest einer Durchgangsbohrung in einem Werkstück, wobei die zu entgratende Oberfläche der Durchgangsbohrung an der bezüglich des Entgratwerkzeugs abgewandten Seite angeordnet ist.

Des Weiteren betrifft die Erfindung ein Verfahren zum Entgraten mit einem diesbezüglichen Entgratwerkzeug.

### STAND DER TECHNIK

Aus dem Stand der Technik sind Entgratwerkzeug bekannt, mit welchen Oberflächen einer Durchgangsbohrung entgratet werden können, wobei die zu entgratende Oberfläche auf der abgewandten Seite auf dem Werkstück bezüglich des Entgratwerkzeugs angeordnet sind. Besonders bei Bohrungen mit kleineren Durchmessers ist es bekannt, sogenannte Rückwärtssenker zu verwenden, um schwer zugängliche Oberflächen zu Entgraten oder anzufassen. Auch wird in der Flugzeug- und Raumfahrtindustrie ein höchster Anspruch auf eine gratlose, aerodynamische Oberflächenbeschaffenheit gelegt, die eine Vielzahl von Endgratbearbeitungen insbesondere durch Rückwärtsendgratungen erfordern.

So zeigt die DE 843 79 38 U1 einen Rückwärtssenker mit einem schwenkbar pendelnden aufgehängten Antriebsmotor, wobei durch den Motor eine Entgratschneide mit zumindest einer Schneide auf einer Welle bewegt werden kann. Durch die beweglich geführte Schneide kann diese an den Rand der zu Entgraten Bohrung geführt werden.

Die DE 10 2013 108 232 A1 zeigt einen weiteren Rückwärtssenker mit einem abnehmbaren Werkzeugkopf und Werkzeugschaft, wobei der Werkzeugschaft von der Seite, an welcher die Senke eingebracht werden soll, durch die Durchgangsbohrung gesteckt und von der Seite der Werkzeugmaschine mit dieser verbunden wird, sodass die Ein- und Ausspannvorgänge an der Werkzeugmaschine erfolgen und das Rückwärtssenkwerkzeug von der Bearbeitungsseite aus in die Durchgangsbohrung eingesetzt und wieder entnommen werden muss.

Es besteht das Problem, dass derartige Entgratwerkzeuge, insbesondere Rückwärtssenker, aus vielen einzelnen Elementen bzw. Bauteilen bestehen und demnach aufwendig und kostenintensiv in der Herstellung sind.

Zudem besteht das Problem, dass für unterschiedliche Bohrungsdurchmesser entweder unterschiedliche Rückwärtssenkköpfe montiert werden müssen, oder eine aufwändige Konstruktion zur Ausführung eines anpassbaren Rückwärtssenkkopf erfolgen muss. Weiterhin erfolgt beim Einsatz des Werkzeugs eine Montage von beiden Seiten des Werkstücks, sodass das Werkstück von beiden Seiten zugänglich sein muss.

Die Druckschrift EP 0 072 374 A1 offenbart ein Entgratwerkzeug gemäß dem Oberbegriff des unabhängigen Anspruchs 1. Die Druckschrift EP 1 247 615 A2 offenbart eine Bearbeitungseinrichtung zur Kantenbearbeitung von Schneidwerkzeugen mit einer Vielzahl von flexiblen Bearbeitungsbürstfäden, die mit Abrasivstoffen besetzt sind.

Ausgehend von der EP 0 072 374 A1 ist es Aufgabe der Erfindung, ein Entgratwerkzeug vorzuschlagen, das durch einfache und kostengünstige Herstellung sowie eine flexible Anpassung des Entgratungsbereichs an unterschiedliche Durchgangsbohrungen gekennzeichnet ist, wobei auch Durchgangsbohrungen entgratet werden können, die nur von einer Seite des Werkstücks zugänglich sind, und Unwuchten vermieden werden.

Diese Aufgabe wird durch ein Entgratwerkzeug nach dem unabhängigen Anspruch 1 gelöst. Vorteilhafte Weiterentwicklungen der Erfindung sind Gegenstand der Unteransprüche.

### OFFENBARUNG DER ERFINDUNG

Gegenstand der Erfindung ist ein Entgratwerkzeugs zum Entgraten zumindest einer Durchgangsbohrung in einem Werkstück, wobei die zu entgratende Oberfläche der Durchgangsbohrung an der bezüglich des Entgratwerkzeugs abgewandten Seite angeordnet ist, umfassend einen Grundkörper mit einem Werkzeugschaft und einem Werkzeugkopf. Der Werkzeugschaft umfasst einen Einspannabschnitt und der Werkzeugkopf einen Führungsabschnitt mit einer sich entlang oder parallel zu einer Rotationsachse erstreckenden Führungshülse.

Es wird vorgeschlagen, dass der Werkzeugkopf eine flexible Faser mit einer abrasiven Faseroberfläche aufweist, die in der Führungshülse unlösbar oder lösbar fixiert ist, wobei die Faser eine freie Länge (L1) und die Führungshülse eine Länge (L2) aufweist, wobei die freie Länge (L1) und/oder die Länge (L2) zumindest der Tiefe (T) der Durchgangsbohrung entspricht. Erfindungsgemäß ist die Faser innerhalb der Führungshülse entlang der Rotationsachse geführt. Dadurch wird erreicht, dass die Faser in direkter Verlängerung zur Führungshülse angeordnet ist, und in einer Ruheposition auf der Rotationsachse des Entgratwerkzeugs angeordnet ist. Bei einer Rotation des Entgratwerkzeugs wird somit durch Auslenkung der Faser keine Unwucht bezüglich des Werkzeugkopfes erzielt. Somit kann die Genauigkeit bzw. Symmetrie der erzeugten Senke bzw. beim Entgraten verbessert bzw. sichergestellt werden.

Mit anderen Worten betrifft die Erfindung ein Rückwärtssenkwerkzeug bzw. ein Rückwärtsentgratwerkzeug, dass zum Entgraten oder Senken eine Durchgangsbohrung, die auf der gegenüberliegenden Seite des Werkstücks bezüglich der Werkzeugmaschine entgratet werden soll, geeignet ist. Mit einem erfindungsgemäßen Entgratwerkzeug kann demnach eine Durchgangsbohrung auf der Seite entgratet bzw. gesenkt werden, die für eine Bedienperson die sich auf der Seite der Werkzeugmaschine befindet nicht sichtbar, d.h. abgewandt ist. Dies gilt ebenso für den Fall, dass die Bedienung nicht durch eine Bedienperson, sondern durch einen Roboter erfolgt, wobei ein Entgraten auf der bezüglich des Roboters abgewandten Seite erfolgen soll. In beiden Fällen kann ein Entgraten bzw. Senken auf einer nicht zugänglichen Seite des Werkstücks erfolgen. Alle zu der Bearbeitung der Öffnungsoberfläche der Durchgangsbohrung bzw. der Oberfläche des Werkstücks notwendigen Bearbeitung- bzw. Bauelemente werden demnach von einer Seite, die die Seite der Werkzeugmaschine darstellt, durch die Durchgangsbohrung für den Bearbeitungszustand hindurchgeführt und auf selbem Wege wieder entfernt. Das erfindungsgemäße Entgratwerkzeugs weist dafür einen Werkzeugschaft mit einem Einspannabschnitt, zum Einspannen in einer Werkzeugmaschine, auf, sowie einen Werkzeugkopf, bestehend zumindest aus einem Führungsabschnitt und einer Faser. Die Faser ist aus einem flexiblen Material ausgebildet und kann durch Rotation aus der Position der Ruhelage der Faser wegbewegt werden. Die Faser kann in Verlängerung des Führungsabschnitts am Werkzeugkopf angeordnet sein. Der Führungsabschnitt dient zum Einspannen der Faser und ist als Führungshülse ausgebildet. Die Führungshülse ist im Innern bevorzugt ebenso mit Material gefüllt, wobei die Führungshülse als Rundstab ausgebildet sein kann. Die Faser sowie die Führungshülse können die gleiche oder eine unterschiedliche Länge aufweisen. Die Faser kann eine geringere Querschnittsgröße als die Führungshülse aufweisen oder auch mit einem identischen Querschnitt als Verlängerung zur Führungshülse ausgebildet sein. Ebenso kann die Faser eine größere Querschnittsgröße als die Querschnittsgröße der Führungshülse aufweisen. Bei einer Rotation des Entgratwerkzeugs durch eine Werkzeugmaschine verbleibt demnach der Führungsabschnitt mit der Führungshülse auf der Rotationsachse, während die Faser eine Auslenkung in Abhängigkeit der Rotationsgeschwindigkeit und der Länge der Faser erfährt. Die Faser kann zum einen eine freie Länge aufweisen, die zumindest der Tiefe der Durchgangsbohrung entspricht. Ebenso ist es vorteilhaft, wenn die Länge des Führungsabschnitts und somit die Länge der Führungshülse zumindest der Tiefe der Durchgangsbohrung entspricht. Dadurch wird zum einen ermöglicht, dass die bezüglich der Werkzeugmaschine gegenüberliegende Oberfläche des Werkstücks mit der Faser erreicht wird. Weiterhin wird sichergestellt, dass bei einer Längsverschiebung des Entgratwerkzeugs bezüglich der Rotationsachse des Entgratwerkzeugs über einen gewissen Zeitraum ein Kontakt zwischen der Faseroberfläche und der zu entgratenden bzw. zu senkenden Öffnungsoberfläche der Durchgangsbohrung erfolgen kann. Das Entgratwerkzeugs ist dafür ausgebildet, über einen Kontakt zwischen der Faseroberfläche der Faser und der zu entgratenden Oberfläche eine Entgratung bzw. Senkung einer Durchgangsbohrung auszuführen. Der Senkwinkel wird durch die Rotationsgeschwindigkeit und die axiale Verfahrgeschwindigkeit des Werkzeugs beeinflusst. Die Bearbeitung erfolgt über die abrasive Wirkung durch eine Reibung zwischen der Faseroberfläche und der Werkstückoberfläche, die durch eine Rotation der Werkzeugmaschine und des Entgratwerkzeugs bei einer axialen Rückwärtsbewegung des Werkzeugs in Entnahmerichtung der Durchgangsbohrung erzeugt wird. Die komplette Oberfläche der Faser steht für die Erzielung eines Materialabtrag zur Verfügung, wobei durch eine Längsverschiebung des Entgratwerkzeugs in Richtung der Rotationsachse des Entgratwerkzeugs die komplette Oberfläche zumindest auf einer Längsseite der Faser zu der zu entgratenden Stelle geführt werden kann. Bevorzugt erfolgt eine Längsverschiebung des Entgratwerkzeugs parallel zu einer Rotation des Entgratwerkzeugs. Die Faser weist bevorzugt einen runden Querschnitt auf. Ebenso kann die Faser auswechselbar in der Führungshülse montiert sein, wobei auch lediglich eine Rotation der Faser bezüglich der Entspannung in der Führungshülse erfolgen kann, um einen anderen Abschnitt der Faseroberfläche in Kontakt mit einer zu bearbeiteten Öffnungsoberfläche zu bringen. Das Entgratwerkzeugs ist ebenso dafür ausgebildet, unterschiedlich lange Fasern, d. h. Faser mit unterschiedlich langen freien Längen, in der Führungshülse zu fixieren bzw. einzuspannen. Über die freie Länge der Faser sowie die Rotationsgeschwindigkeit kann der Bearbeitungswinkel, d. h. der Winkel des entgrateten bzw. gesenkten Bereichs, beeinflusst werden.

In einer bevorzugten Ausführungsform kann die Faser zumindest abschnittsweise als Kunststofffaser, Glasfaser, Metallfaser, Keramikfaser und/oder Kohlenstofffaser ausgebildet sein. Dabei kann die Faser vollkommen aus einem Material hergestellt werden, oder aus Abschnitten unterschiedlicher Materialbeschaffenheit bestehen. Die Abschnitte können bezüglich der Länge der Faser als auch bezüglich des Querschnitts der Faser unterteilt sein. Somit kann eine Faser auch über die komplette Länge in einer Querschnittshälfte mit einem ersten Material und in einer zweiten Querschnittshälfte mit einem davon abweichenden Material ausgebildet sein. Ist die Faser drehfest in der Führungshülse, d. h. fest fixiert, so kann die bei einer Rotation außenliegende Querschnittshälfte der Faser aus einem besonders abrasiven Material bestehen, und der bei einer Rotation innenliegende Bereich der Faser aus einem kostengünstigeren bzw. anderweitigen Material ausgebildet sein. Dabei können die beiden sogenannten Materialhälften auch eine unterschiedliche Größe aufweisen, wobei beispielsweise der Abschnitt aus einem abrasiven Material lediglich ein Drittel der Querschnittsfläche der Faser und auch nur ein Drittel des Volumens der Faser ausmachen kann.

In einer bevorzugten Ausführungsform kann die Faser als ein Bündel einzelner Filamente, d. h. als Multifilament, oder als ein einziges Filament, d. h. als Einzelfilament, ausgebildet sein. Besteht die Faser aus einzelnen Filamenten, so können diese gegeneinander verdreht die Faser ausbilden, wobei eine strukturierte Faseroberfläche entsteht. Dadurch kann die abrasive Wirkung verstärkt werden.

In einer bevorzugten Ausführungsform kann die Faseroberfläche der Faser strukturiert oder texturiert ausgebildet sein, um die abrasive Wirkung bei einem Kontakt mit dem Werkstück bereitzustellen. Dabei kann eine Wellen- beziehungsweise Noppenstruktur oder eine andersartige Struktur auf der Faseroberfläche vorhanden sein. Die Struktur kann auch nur in Teilbereichen der Faseroberfläche ausgebildet werden, wobei diese Teilbereiche bei einer Rotationsbewegung des Entgratwerkzeugs bevorzugt in Kontakt mit der zu bearbeitenden Werkstückoberfläche stehen.

In einer bevorzugten Ausführungsform kann am frontseitigen Ende der Faser ein Gewicht befestigt sein, wobei bevorzugt die Querschnittsgröße des Gewichts kleiner oder gleich der Querschnittsgröße der Faser ist. Durch das Gewicht kann sichergestellt werden, dass bei einer Rotationsbewegung des Entgratwerkzeugs die Faser zu jedem Zeitpunkt gespannt wird, sobald diese eine Auslenkung aus der Ruhelage erfährt. So kann bei der Bearbeitung der Druck zwischen der Faseroberfläche und der zu bearbeitenden Öffnungsoberfläche verstärkt werden, wodurch die abrasive Wirkung verstärkt und die Bearbeitungszeit minimiert wird. Das Gewicht kann eine Metallhülse sein, die am Faserende angeordnet ist.

In einer bevorzugten Ausführungsform kann die Führungshülse in der Länge veränderbar einstellbar sein, insbesondere teleskopisch Längen veränderbar sein. Die Verlängerung kann beispielsweise im Bereich der Entspannung in der Führungshülse stattfinden. Dadurch wird ermöglicht, dass unterschiedlich tiefe Durchgangsbohrungen an der zu bearbeitenden Öffnungsoberfläche mit der Faser erreicht und somit bearbeitet werden können.

In einer bevorzugten Ausführungsform kann die Faser auswechselbar in der Führungshülse montiert sein. Bei einem Verschleiß der Faser muss demnach nicht der komplette Grundkörper, bestehend aus Werkzeugschaft und Werkzeugkopf, ausgetauscht bzw. entsorgt werden. Die Faser kann in der Führungshülse verspannt sein und kann vorzugsweise durch Betätigung einer vorteilhaft federgelagerten Verspannmechanik, insbesondere werkzeugfrei, ausgewechselt werden.

In einer bevorzugten Ausführungsform kann an dem Führungsabschnitt ein Anschlag angeordnet sein, der eine Rotationsbewegung relativ zu der Führungshülse ausführen kann, wobei der Anschlag einen größeren Durchmesser als der größte Durchmesser der Durchgangsbohrung aufweist. Da sich die zu bearbeitende Öffnungsoberfläche in einem von der Werkzeugmaschine nicht sichtbaren Bereich befindet, kann durch den Anschlag sichergestellt werden, dass eine vordefinierte Senke bzw. eine vordefinierte Entgratungsbearbeitung erfolgen kann.

In einer bevorzugten Ausführungsform kann der Anschlag einen Anschlagring und eine Anschlaghülse aufweisen. Der Anschlag kann demnach aus einzelnen Elementen ausgebildet sein, wobei diese gegeneinander bewegt werden können. So können an eine Anschlaghülse auch unterschiedlich ausgebildete Anschlagringe angebracht werden.

In einer bevorzugten Ausführungsform kann der Anschlagring gegenüber der Anschlaghülse eine Rotationsbewegung ausführen, wobei bevorzugt die Anschlaghülse drehfest mit der Führungshülse gelagert ist und der Anschlagring bevorzugt über ein Drehlager an der Anschlaghülse gelagert ist. Die Anschlaghülse ist bevorzugt direkt mit der Führungshülse verbunden, bzw. auf diese teleskopisch aufgeschoben, wobei der Anschlagring einen Kontakt mit einer Werkstückoberfläche herstellen kann, um die Bearbeitungstiefe bzw. Bearbeitungsposition festzulegen und zu erhalten. Der Anschlagring ist an einem axialen Ende der Anschlaghülse drehlagernd am dieser angeordnet.

In einer bevorzugten Ausführungsform können der Anschlag und die Führungshülse in axialer Richtung zur Rotationsachse relativ zueinander, insbesondere teleskopisch, verschiebbar sein. Dadurch können verschiedene Bearbeitungstiefen eingestellt werden. Dies ist von Vorteil, wenn unterschiedlich tiefe Durchgangsbohrungen in unterschiedlich tiefen Werkstücken bearbeitet werden sollen. Der Anschlag kann über die komplette Bearbeitungszeit in Kontakt mit der Werkstückoberfläche auf der Seite der Werkzeugmaschine stehen, während die Faser sowie die Führungshülse eine Längsverschiebung bezüglich der Rotationsachse des Entgratwerkzeugs erfährt. Demnach erfährt die Werkzeugmaschine ebenso diese Längsverschiebung. So kann die Faser unterschiedlich weit aus dem Anschlag herausgeschoben werden.

In einer bevorzugten Ausführungsform kann eine axiale Führung der Anschlaghülse entlang der Führungshülse durch einen Führungsstift, der radial an der Anschlaghülse angeordnet ist, und einem Führungsschlitz, der bevorzugt in axialer Längsrichtung an der Führungshülse eingebracht ist, erfolgen, wobei der Führungsstift in den Führungsspitze eingreift. Dadurch wird sichergestellt, dass lediglich eine relative Längsverschiebung zwischen Führungshülse und Anschlaghülse erfolgen kann, während eine relative Rotationsbewegung dieser beiden Elemente gegeneinander verhindert wird.

Gegenstand der Erfindung ist weiterhin ein Verfahren zum Entgraten mit einem erfindungsgemäßen Entgratwerkzeugs. Es wird vorgeschlagen, dass sich das Verfahren durch die folgenden Schritte auszeichnet:
- Einführen des Entgratwerkzeugs in eine Durchgangsbohrung voneiner gegenüberliegenden Seite des Werkstücks bezüglich einer zu entgratenden Öffnungsoberfläche, wobei zumindest die Faser auf der zu entgratenden Oberfläche teilweise aus der Durchgangsbohrung übersteht,
- Rotieren des Entgratwerkzeugs auf Nenndrehzahl, wobei die Faser durch die Fliehkraft bevorzugt im Wesentlichen rechtwinklig bezüglich der Führungshülse Weg strebt,
- Herausziehen des Entgratwerkzeugs aus der Durchgangsbohrung während der Rotationsbewegung des Entgratwerkzeugs, sodass ein Entgraten und Bearbeitung an der Oberfläche der Durchgangsbohrung bewirkt wird, wobei der Entgratungswinkel von der Geschwindigkeit und der Längsbewegung des Entgratwerkzeugs abhängt.

Dabei kann ab dem Zeitpunkt, wenn sich die Faser in der Position befindet, in der sie an der zu bearbeitenden Oberfläche aus dem Werkstück heraussteht, eine Rotationsbewegung des Entgratwerkzeugs erfolgen. Diese Rotationsbewegung kann bis zum vollkommenen herausgezogen Zustand der Faser aus der Durchgangsbohrung beibehalten werden, oder auch früher abgebrochen werden. Dadurch kann unter anderem festgelegt werden, über welchen Teil der Faseroberfläche ein Entgraten erfolgt. Erfolgt eine Rotation bis zum vollkommenen Herausziehen des Entgratwerkzeugs aus der Durchgangsbohrung so folgt über die komplette Länge der Faser, d. h. über die Länge der Faseroberfläche, eine Entgratungswirkung. Wird dagegen nur in einem gewissen Teilabschnitt des Verfahrens eine Rotation des Entgratwerkzeugs durchgeführt, erfolgt eine Entgratungswirkung nur mit diesem Abschnitt der Faseroberfläche, die während der Rotationsbewegung mit der zu bearbeitenden Öffnungsoberfläche in Kontakt kommt.

In einer bevorzugten Ausführungsform des Verfahrens kommt während der Rotationsbewegung um die Rotationsachse die Faseroberfläche der Faser mit der zu entgratenden Oberfläche der Durchgangsbohrung in Kontakt, wobei eine Entgratungswirkung durch die Faseroberfläche stattfindet. Da die Faser aus einem flexiblen Material besteht, wird diese bei einer Rotationsbewegung des Entgratwerkzeugs durch die Fliehkraft aus der Ruhelage ausgelenkt. Die Faser kann bis zu einem Winkel von 90° bezüglich der Längsachse der Führungshülse ausgelenkt werden. Wird nun das Entgratwerkzeugs derart in Längsrichtung verschoben, dass die Faser bzw. die Faseroberfläche mit der zu Entgraten Öffnungsoberfläche in Kontakt tritt, kommt es zu einer Abrasionswirkung zwischen der Faseroberfläche und der Oberfläche des Werkstücks. Somit erfolgt ein Materialabtrag, der eine Senke bzw. ein Entgraten dieses Bereichs darstellt.

In einer bevorzugten Ausführungsform des Verfahrens kann die Drehzahl des Entgratwerkzeugs und / oder die freie Länge der Faser für eine Einstellung einer Zugspannung in der Faser eingestellt werden. Dadurch kann die Menge des Materialabtrags bestimmt werden sowie eine Einstellung des Entgratungswinkels erfolgen.

In einer bevorzugten Ausführungsform des Verfahrens kann das Werkstück eine Kunststoff-, Verbundfaser- oder Leichtbauplatte sein. Demnach kann das Material der Faser an die zu bearbeitende Werkstoffbeschaffenheit angepasst werden. Ebenso kann die Oberflächenbeschaffenheit der Faser für unterschiedliche zu bearbeitenden Materialien unterschiedlich stark strukturiert, teilweise strukturiert oder glatt ausgebildet werden.

### ZEICHNUNGEN

Weitere Vorteile ergeben sich aus der vorliegenden Zeichnungsbeschreibung. In den Zeichnungen sind Ausführungsbeispiele der Erfindung dargestellt.

Es zeigt:
- Fig. 1: eine Darstellung mehrerer Verfahrensschritte eines Verfahrens zu Entgraten mit einem erfindungsgemäßen Entgratwerkzeug;
- Fig. 2: eine schematische Schnittdarstellung eines Längsschnittes durch eine Ausführungsform eines erfindungsgemäßen Entgratwerkzeugs in zwei Verfahrensschritten;
- Fig. 3: eine schematische Schnittdarstellung eines Längsschnittes durch ein Ausführungsform eines erfindungsgemäßen Entgratwerkzeugs mit einem Anschlag;
- Fig. 4: eine Darstellung einer Ausführungsform eines erfindungsgemäßen Entgratwerkzeugs;
- Fig. 5: eine Darstellung einer Ausführungsform eines erfindungsgemäßen Entgratwerkzeugs in Längsschnitt und Außenansicht;
- Fig. 6: eine Darstellung einer Ausführungsform eines erfindungsgemäßen Entgratwerkzeugs in Längsschnitt und Außenansicht;
- Fig. 7: eine Darstellung einer Ausführungsform eines erfindungsgemäßen Entgratwerkzeugs;
- Fig. 8: einen Ausschnitt aus Fig. 7 in einer isometrischen Darstellung;
- Fig. 9: verschiedene Draufsichten auf verschiedene Ausführungsformen von Werkzeugköpfen in Richtung Längsachse verschiedener Ausführungsformen von Entgratwerkzeugen mit einer unterschiedlichen Anzahl an Fasern.

In den Figuren sind gleiche oder gleichartige Komponenten mit gleichen Bezugszeichen beziffert.

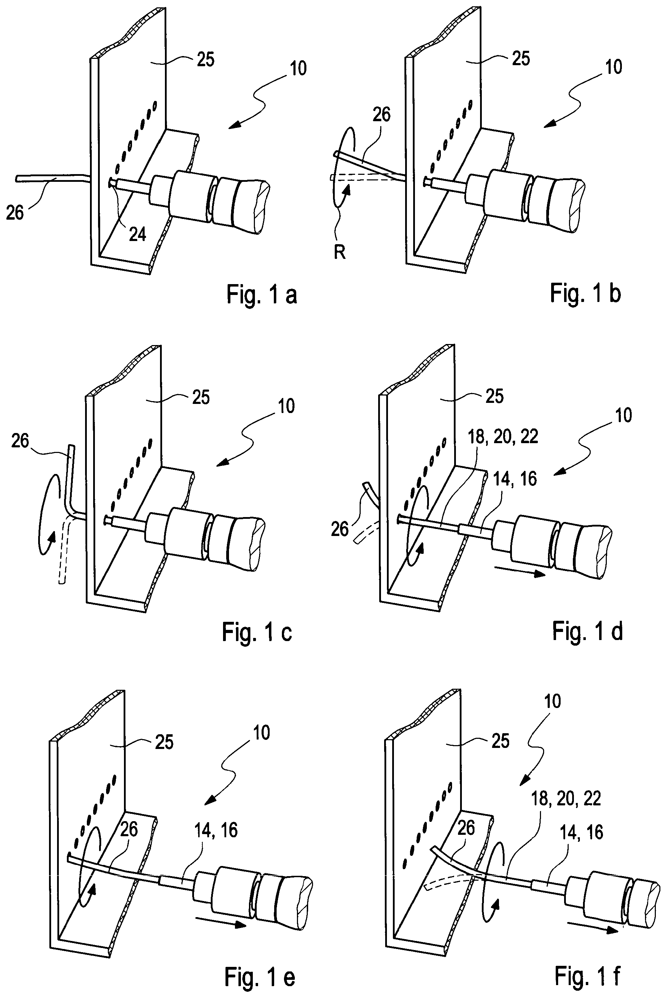

Fig. 1 zeigt verschiedene Verfahrensschritte (a) bis (f) des Verfahrens zum Entgraten mit einem erfindungsgemäßen Entgratwerkzeugs 10. In der dargestellten Ausführungsform besitzt das Entgratwerkzeugs 10 eine Faser 26, die um ein Vielfaches länger als die Dicke des Werkstücks 25, d. h. als die Tiefe T der Durchgangsbohrung 24, ausgebildet ist und auf der Rotationsachse des Entgratwerkzeugs 10 angeordnet ist. Die Faser 26 ist am Werkzeugkopf 18 über einen Führungsabschnitt 20, ausgebildet als Führungshülse 22, eingespannt. Der Werkzeugschaft 14 weist einen Einspannabschnitt 16 auf, mit welchem dieser in eine Werkzeugmaschine eingespannt werden kann. Weiterhin ist in der dargestellten Ausführungsform des Entgratwerkzeugs 10 die Führungshülse 22 länger ausgeführt als die Dicke des Werkstücks 25. Im Schritt (a) erfolgt ein Einführen des Entgratwerkzeugs 10 in eine Durchgangsbohrung 24, die in einem Werkstück 25 eingebracht wurde. Das Entgratwerkzeugs 10 wird derart in die Durchgangsbohrung 24 geführt, dass die Faser 26 an der gegenüberliegenden Seite des Werkstücks 25 bezüglich des Entgratwerkzeugs 10 aus der Durchgangsbohrung 24 übersteht, sodass die Faseroberfläche 28 mit der zu entgratenden Öffnungsoberfläche 38 (in dieser Ansicht nicht sichtbar) in Kontakt treten kann. Im Schritt (b) erfolgt nun eine Rotation des Entgratwerkzeugs 10, sodass die Faser 26 durch die Rotationsbewegung R eine Auslenkung bezüglich der Längsachse des Entgratwerkzeugs 10 erfährt. Bei Erreichen einer Nenndrehzahl, dargestellt in Schritt (c), ist die Faser 26 durch die Fliehkraft im Wesentlichen rechtwinklig bezüglich der Führungshülse 22 angeordnet. Im darauffolgenden Schritt (d) erfolgt eine Längsbewegung des Entgratwerkzeugs 10 in Richtung der Rotationsachse (nach rechts in der dargestellten Anordnung), sodass die freie Länge der Faser 26 durch die Durchgangsbohrung 24 gezogen wird. Dabei steht die Faser 26 mit der Faseroberfläche 28 mit der zu entgratenden Öffnungsoberfläche 38 der Durchgangsbohrung 24 in Kontakt, wodurch die Entgratungswirkung erzielt wird. Während der Längsverschiebung des Entgratwerkzeugs 10 übt die Faser 26 mit dem Entgratwerkzeug 10 eine Rotationsbewegung R aus. In Schritt (e) hat durch die Längsverschiebung das Faserende nahezu die Durchgangsbohrung 24 erreicht, sodass die Faser 26 nur noch minimal von der Rotationsachse 36 ausgelenkt wird. Erst wenn das Entgratwerkzeugs 10 vollkommen aus der Durchgangsbohrung 24 heraus bewegt wurde, dargestellt in Schritt (f), wird in dieser Ausführungsform die Rotationsbewegung R beendet. Das Werkstück 25 kann eine Kunststoff- , Verbundfaser-oder Leichtbauplatte darstellen.

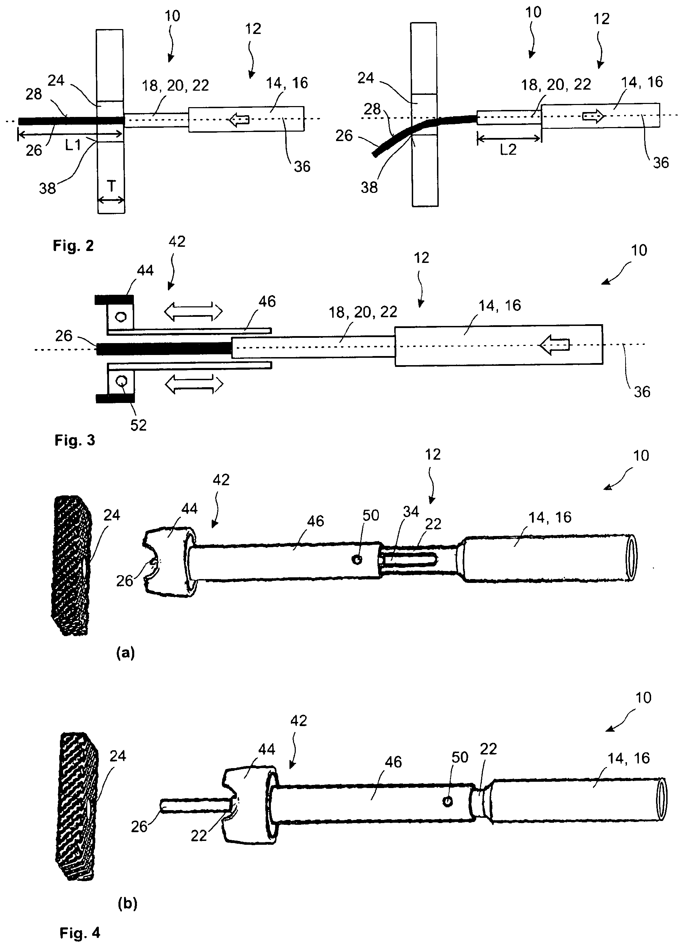

Fig. 2 zeigt eine schematische Schnittdarstellung eines Längsschnittes durch eine Ausführungsform eines erfindungsgemäßen Entgratwerkzeugs 10, wobei das Entgratwerkzeugs 10 zu zwei unterschiedlichen Verfahrensschritten dargestellt ist. Die linke Darstellung stellt Schritt (a) aus Fig. 1 dar, die rechte Darstellung Schritt (d) aus Fig. 1. In Fig. 2 wird deutlich, dass die Länge L1 der Faser 26 sowie die Länge L2 der Führungshülse 22 um ein Vielfaches länger als die Tiefe T der Durchgangsbohrung 24 ausgebildet ist. Weiterhin wird deutlich, dass in der rechten Darstellung die Faseroberfläche 28 mit der zu Entgraten den Öffnungsoberfläche 38 derart in Kontakt steht, dass ein Entgraten bzw. senken der Durchgangsbohrung 24 erreicht werden kann. Das Entgratwerkzeugs 10 ist derart in der Durchgangsbohrung 24 bzw. auf der Mittelachse der Durchgangsbohrung 24 angeordnet, dass der übrige Abschnitt der freien Länge der Faser 26 nicht mit der Oberfläche der Durchgangsbohrung 24 in Kontakt steht. Wird das Entgratwerkzeugs 10 in der rechten Darstellung nach rechts bewegt, so steht die zu entgratende Öffnungsoberfläche 38 über den komplette Verschiebungsweg bzw. Verschiebungszeitraum mit der Faseroberfläche 28 in Kontakt.

Eine schematische Schnittdarstellung eines Längsschnittes durch eine Ausführungsform eines erfindungsgemäßen Entgratwerkzeugs 10 mit einem Anschlag 42 ist in Fig. 3 dargestellt. Der Grundkörper 12, bestehend aus Werkzeugschaft 14 sowie Werkzeugkopf 18, ist in Längsrichtung relativ zur Rotationsachse des Entgratwerkzeugs 10 entgegen des Anschlags 42 verschieblich ausgebildet. Dadurch kann auch die Faser 26 derart in Längsrichtung des Entgratwerkzeugs 10 verschoben werden, dass diese unterschiedlich weit über den Anschlag 42 (in der Darstellung auf der linken Seite) übersteht. Der Anschlag 42 besteht aus einer Anschlaghülse 46 und einem Anschlagring 44, wobei der Anschlagring 44 und die Anschlaghülse 46 über ein Drehlager 52 miteinander gelagert sind. Das Drehlager 52 kann als Wälzlager oder Gleitlager, demnach als ein Kugellager ausgebildet sein. Dadurch kann der Anschlagring 44 eine Rotationsbewegung bezüglich der Anschlaghülse 46 ausführen, wobei die Anschlaghülse 46 drehfest mit dem Führungsabschnitt 20 in Form einer Führungshülse 22 gelagert ist.

Fig. 4 zeigt ein Entgratwerkzeugs 10 nach Fig. 3 in einer Außenansicht. Das Entgratwerkzeugs 10 ist zentrisch auf eine Durchgangsbohrung 24 ausgerichtet. Fig. 4 (a) zeigt eine Situation, in welcher die Faser 26 nahezu komplett innerhalb des Anschlags 42 angeordnet ist. In Fig. 4 (b) steht die Faser 26 zumindest teilweise über den Anschlag 42 über. Eine Verschiebung des Anschlags 42 relativ zum Grundkörper 12 erfolgt über einen Führungsstift 50, der in einem Führungsschlitz 34 verläuft, wobei der Führungsschlitz 34 in Längsrichtung in der Führungshülse 22 angeordnet ist. Die Länge des Führungsschlitzes 34 bestimmt die maximal mögliche Längsverschiebung des Anschlags 42 relativ zum Grundkörper 12.

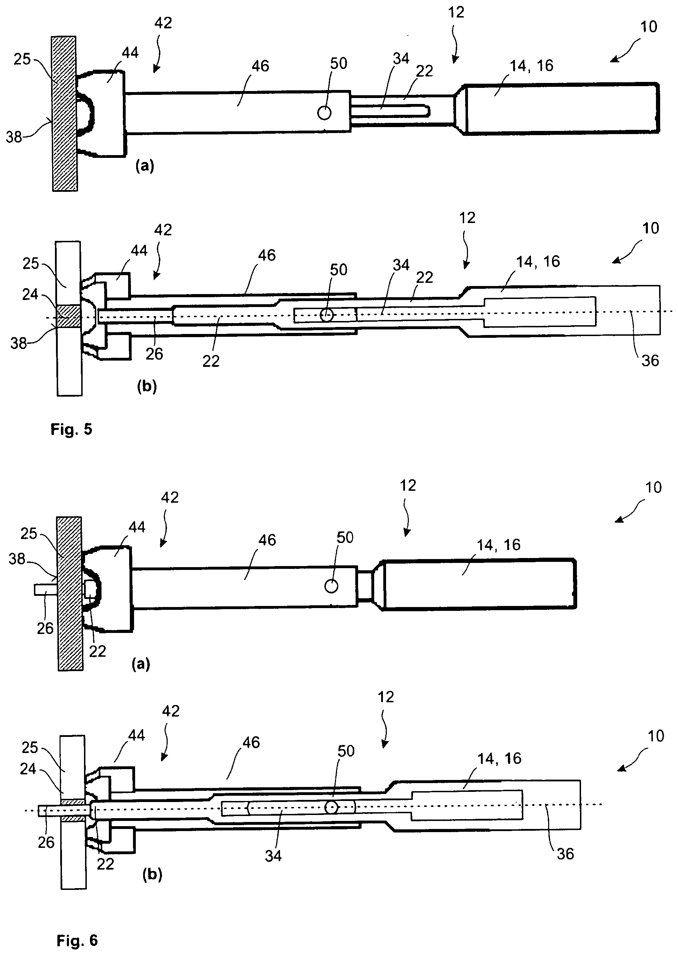

Fig. 5 zeigt eine Anordnung, in welche der Anschlag 42 mit einem Werkstück 25 derart in Kontakt steht, dass die Faser 26 zentrisch bezüglich der Durchgangsbohrung 24 angeordnet ist. Dies wird durch die Schnittdarstellung in Fig. 5 (b) verdeutlicht. Demnach liegen in dieser Darstellung die Rotationsachse 36 sowie die Achse der Durchgangsbohrung 24 auf einer Linie.

Die Situation nach Ausfahren der Faser 26 in die Durchgangsbohrung 24 zeigt Fig. 6, wobei in Fig. 6 (b) verdeutlicht wird, dass die freie Länge der Faser 26 länger als die Tiefe der Durchgangsbohrung 24 ausgebildet ist. In der dargestellten Ansicht greift demnach die Faser 26 komplett in die Durchgangsbohrung 24 ein, während die Führungshülse 22 außerhalb der Durchgangsbohrung 24 angeordnet ist.

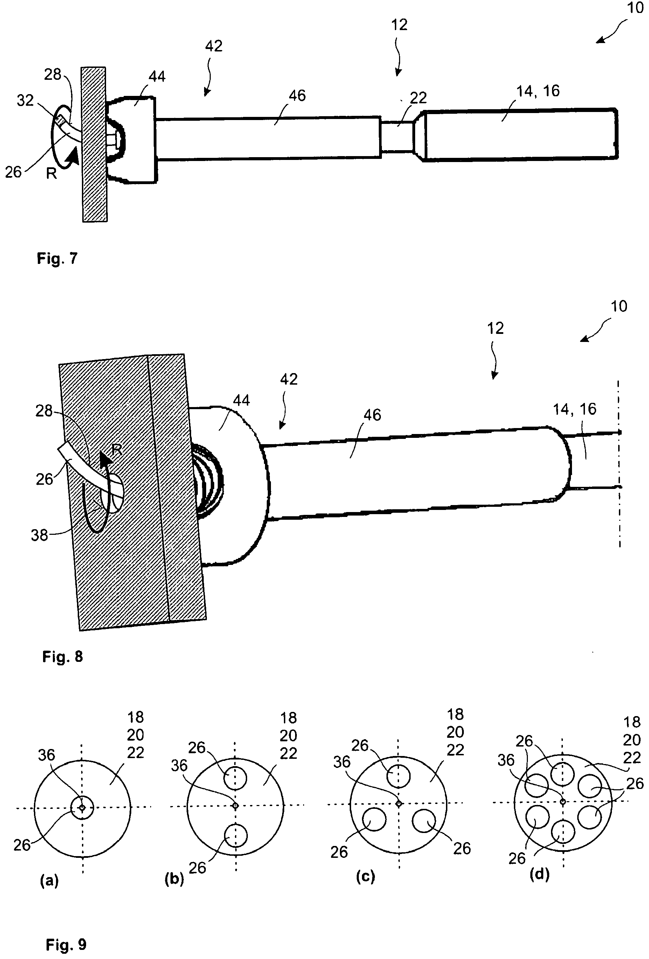

Die Figs. 7 und 8 zeigen eine Situation nach Fig. 6, wobei die Faser 26 eine Rotationsbewegung R ausführt.

In der Ausführungsform des Entgratwerkzeugs 10 nach Fig. 7 ist ein Gewicht 32 am Ende der Faser 26 angeordnet. Das Gewicht 32 besitzt im Vergleich zur Länge der Faser 26 eine geringe Abmessung, wobei die Querschnittsgröße des Gewichts 32 kleiner oder gleich der Querschnittsgröße der Faser ausgebildet ist.

Die isometrische Darstellung in Fig. 8 zeigt, wie bei einer Rotationsbewegung R die Faseroberfläche 28 mit der zu entgratenden Öffnungsoberfläche 38 in Kontakt kommt, wobei bei einer Rotationsbewegung R um 360° die komplette zu entgratende Öffnungsoberfläche 38 einmal im Umfang von der Faseroberfläche 28 berührt wird.

Fig. 9 zeigt verschiedene Draufsichten auf verschiedene Ausführungsformen von Werkzeugköpfen von Entgratwerkzeugen 10, wobei die unterschiedlichen Entgratwerkzeugs 10 eine unterschiedliche Anzahl an Fasern 26 aufweisen. Fig. 9 (a) zeigt eine Ausführungsform eines erfindungsgemäßen Entgratwerkzeugs 10, das lediglich eine Faser 26 aufweist. Die Faser 26 ist zentrisch auf der Rotationsachse 36 angeordnet und wird in der Führungshülse 22, die den Führungsabschnitt 20 des Werkzeugkopfs 18 darstellt, geführt. In der nicht zur Erfindung gehörenden Ausführungsform nach Fig. 9 (b) besitzt das Entgratwerkzeugs 10 zwei Fasern 26, die bezüglich einer Querachse, die durch die Rotationsachse 36 des Entgratwerkzeugs 10 verläuft, symmetrisch angeordnet sind. Ebenso sind die beiden Fasern 26.symmetrisch zur Rotationsachse 36 angeordnet, sodass bei einer Rotationsbewegung des Entgratwerkzeugs 10 keine Unwucht durch die Fliehkraft der beiden Fasern 26 auf die Führungshülse 22 ausgeübt wird. Fig. 9 (c) zeigt eine nicht zur Erfindung gehörende Ausführungsform eines Entgratwerkzeugs mit drei Fasern 26, wobei alle drei Fasern 26 im gleichen Abstand zueinander in der Führungshülse 22 eingespannt und fixiert sind. Durch eine derartige Anordnung kann ebenso eine Unwucht am Werkzeugkopf 18 bei einer Rotationsbewegung des Entgratwerkzeugs 10 verhindert werden. In der nicht zur Erfindung gehörenden Ausführungsform nach Fig. 9 (d) weist das Entgratwerkzeugs 10 sechs Fasern 26 auf, wobei alle Fasern 26 um die Rotationsachse 36 in Umfangsrichtung gleichverteilt um die Rotationsachse 36 an der Führungshülse 22 angeordnet sind.

In allen Ausführungsformen nach Fig. 9 können die jeweiligen Fasern 26 jeweils die gleiche Länge aufweisen oder mit unterschiedlichen Längen ausgebildet sein sowie austauschbar montierbar sein. Bevorzugt weisen jedoch alle Fasern 26 eines Entgratwerkzeugs 10 die gleiche Länge auf.

### Bezugszeichenliste

- 10: Entgratwerkzeug
- 12: Grundkörper
- 14: Werkzeugschaft
- 16: Einspannabschnitt
- 18: Werkzeugkopf
- 20: Führungsabschnitt
- 22: Führungshülse
- 24: Durchgangsbohrung
- 25: Werkstück
- 26: Faser
- 28: Faseroberfläche
- 30: Faserbündel
- 32: Gewicht
- 34: Führungsschlitz in Führungshülse
- 36: Rotationsachse
- 38: Zu entgratende Öffnungsoberfläche
- 42: Anschlag
- 44: Anschlagring
- 46: Anschlaghülse
- 50: Führungsstift
- 52: Drehlager
- T: Tiefe der Durchgangsbohrung
- L1: Länge der Faser
- L2: Länge der Führungshülse
- R: Rotationsbewegung
- T: Tiefe der Durchgangsbohrung
- L1: Länge der Faser
- L2: Länge der Führungshülse
- R: Rotationsbewegung

## Patentansprüche

1. Entgratwerkzeug (10) zum Entgraten zumindest einer Durchgangsbohrung (24) in einem Werkstück (25), wobei die zu entgratende Öffnungsoberfläche (38) der Durchgangsbohrung (24) an der bezüglich des Entgratwerkzeugs (10) abgewandten Seite angeordnet ist, umfassend einen Grundkörper (12) mit einem Werkzeugschaft (14) und einem Werkzeugkopf (16), wobei der Werkzeugschaft (14) einen Einspannabschnitt (16) und der Werkzeugkopf (16) einen Führungsabschnitt (20) mit einer entlang oder parallel zu einer Rotationsachse (36) erstreckende Führungshülse (22) umfasst, wobei der Werkzeugkopf (16) eine flexible Faser (26) mit einer abrasiven Faseroberfläche (28) aufweist, die in der Führungshülse (22) unlösbar oder lösbar fixiert ist, wobei die Faser (26) eine freie Länge (L1) und die Führungshülse (22) eine Länge (L2) aufweist, wobei die freie Länge (L1) und / oder die Länge (L2) zumindest der Tiefe (T) der Durchgangsbohrung (24) entspricht, **dadurch gekennzeichnet, dass** die Faser (26) innerhalb der Führungshülse (22) entlang der Rotationsachse (36) geführt und dadurch in einer Ruheposition auf der Rotationsachse (36) des Entgratwerkzeugs (10) angeordnet ist.

2. Entgratwerkzeug (10) nach einem der vorgenannten Ansprüche, **dadurch gekennzeichnet, dass** die Faser (26) zumindest abschnittsweise als Kunststofffaser, Glasfaser, Metallfaser, Keramikfaser und / oder Kohlenstoffaser ausgebildet ist.

3. Entgratwerkzeug (10) nach einem der vorgenannten Ansprüche, **dadurch gekennzeichnet, dass** die Faser (26) als ein Bündel einzelner Filamente, d. h. als Multifilament, oder als ein einziges Filament, d. h. als Einzelfilament, ausgebildet ist.

4. Entgratwerkzeug (10) nach einem der vorgenannten Ansprüche, **dadurch gekennzeichnet, dass** die Faseroberfläche (28) der Faser (26) strukturiert oder texturiert ausgebildet ist, um die abrasive Wirkung bei einem Kontakt mit dem Werkstück (25) bereitzustellen.

5. Entgratwerkzeug (10) nach einem der vorgenannten Ansprüche, **dadurch gekennzeichnet, dass** am frontseitigen Ende der Faser (26) ein Gewicht (32) befestigt ist, wobei bevorzugt die Querschnittsgröße des Gewichts (32) kleiner oder gleich der Querschnittsgröße der Faser (26) ist.

6. Entgratwerkzeug (10) nach einem der vorgenannten Ansprüche, **dadurch gekennzeichnet, dass** die Führungshülse (22) in der Länge veränderbar einstellbar ist, insbesondere teleskopisch längenveränderbar ist.

7. Entgratwerkzeug (10) nach einem der vorgenannten Ansprüche, **dadurch gekennzeichnet, dass** die Faser (26) auswechselbar in der Führungshülse (22) montiert ist.

8. Entgratwerkzeug (10) nach einem der vorgenannten Ansprüche, **dadurch gekennzeichnet, dass** an dem Führungsabschnitt (20) ein Anschlag (42) angeordnet ist, der eine Rotationsbewegung relativ zu der Führungshülse (22) ausführen kann, wobei der Anschlag einen größeren Durchmesser als der größte Durchmesser der Durchgangsbohrung (24) aufweist.

9. Entgratwerkzeug (10) nach Anspruch 8, **dadurch gekennzeichnet, dass** der Anschlag (42) einen Anschlagring (44) und eine Anschlaghülse (46) aufweist.

10. Entgratwerkzeug (10) nach Anspruch 9, **dadurch gekennzeichnet, dass** der Anschlagring (44) gegenüber der Anschlaghülse (46) eine Rotationsbewegung ausführen kann, wobei bevorzugt die Anschlaghülse (46) drehfest mit der Führungshülse (22) gelagert ist und der Anschlagring (44) bevorzugt über ein Drehlager (52) mit der Anschlaghülse (46) gelagert ist.

11. Entgratwerkzeug (10) nach einem der Ansprüche 8 bis 10, **dadurch gekennzeichnet, dass** der Anschlag (42) und die Führungshülse (22) in axialer Richtung zur Rotationsachse (36) relativ zueinander verschiebbar sind.

12. Entgratwerkzeug (10) nach Anspruch 11, **dadurch gekennzeichnet, dass** eine axiale Führung der Anschlaghülse (46) entlang der Führungshülse (22) durch einem Führungsstift (50), der radial an der Anschlaghülse (46) angeordnet ist, und einem Führungsschlitz (34), der bevorzugt in axialer Längsrichtung an der Führungshülse (22) eingebracht ist, erfolgt, wobei der Führungsstift (50) in den Führungsschlitz (34) eingreift.

13. Verfahren zum Entgraten mit einem Entgratwerkzeug (10) nach einem der vorgenannten Ansprüche, aufweisend die folgenden Schritte:
- Einführen des Entgratwerkzeugs (10) in eine Durchgangsbohrung (24) von einer gegenüberliegenden Seite des Werkstücks (25) bezüglich einer zu entgratenden Öffnungsoberfläche (38), wobei zumindest die Faser (26) auf der zu entgratenden Öffnungsoberfläche (38) teilweise aus der Durchgangsbohrung (24) übersteht,
- Rotieren des Entgratwerkzeugs (10) auf Nenndrehzahl, wobei die Faser (26) durch die Fliehkraft bevorzugt im Wesentlichen rechtwinklig bezüglich der Führungshülse (22) wegstreben,
- Herausziehen des Entgratwerkzeugs (10) aus der Durchgangsbohrung (24) während der Rotationsbewegung des Entgratwerkzeugs (10), sodass eine Entgratungsbearbeitung an der Öffnungsoberfläche (38) der Durchgangsbohrung (24) bewirkt wird, wobei der Entgratungswinkel von der Geschwindigkeit und der Längsbewegung des Entgratwerkzeugs (10) abhängt.

14. Verfahren zum Entgraten mit einem Entgratwerkzeug (10) nach Anspruch 13, **dadurch gekennzeichnet, dass** während der Rotationsbewegung um die Rotationsachse (36) die Faseroberfläche (28) der Faser (26) mit der zu entgratenden Öffnungsoberfläche (38) der Durchgangsbohrung (24) in Kontakt kommt, wobei eine Entgratungswirkung durch die Faseroberfläche (28) stattfindet.

15. Verfahren zum Entgraten mit einem Entgratwerkzeug (10) nach einem der Ansprüche 13 oder 14, **dadurch gekennzeichnet, dass** die Drehzahl des Entgratwerkzeugs (10) die Zugspannung in der Faser (26) bestimmt.

16. Verfahren zum Entgraten mit einem Entgratwerkzeug (10) nach einem der Ansprüche 13 bis 15, **dadurch gekennzeichnet, dass** das Werkstück eine Kunststoff- , Verbundfaser- oder Leichtbauplatte ist.

## Claims

1. Deburring tool (10) for deburring at least one through hole (24) in a workpiece (25), wherein the opening surface (38) of the through hole (24) to be deburred is located on the side facing away from the deburring tool (10), comprising a base body (12) with a tool shank (14) and a tool head (16), wherein the tool shank (14) comprises a clamping section (16) and the tool head (16) comprises a guide section (20) with a guide sleeve (22) extending along or parallel to an axis of rotation (36), wherein the tool head (16) includes a flexible fiber (26) with an abrasive fiber surface (28) that is fixed in the guide sleeve (22), wherein the fiber (26) has a free length (L1) and the guide sleeve (22) has a length (L2), wherein the free length (L1) and/or the length (L2) corresponds to at least the depth (T) of the through hole (24), **characterized in that** the fiber (26) is guided within the guide sleeve (22) along the axis of rotation (36) and is thereby arranged in a rest position on the axis of rotation (36) of the deburring tool (10).

2. Deburring tool (10) according to one of the preceding claims, **characterized in that** the fiber (26) is formed, at least in sections, as a plastic fiber, glass fiber, metal fiber, ceramic fiber, and/or carbon fiber.

3. Deburring tool (10) according to one of the preceding claims, **characterized in that** the fiber (26) is formed as a bundle of individual filaments, i.e., as a multifilament, or as a single filament, i.e., as a monofilament.

4. Deburring tool (10) according to one of the preceding claims, **characterized in that** the fiber surface (28) of the fiber (26) is structured or textured to provide the abrasive effect upon contact with the workpiece (25).

5. Deburring tool (10) according to one of the preceding claims, **characterized in that** a weight (32) is attached to the front end of the fiber (26), wherein preferably the cross-sectional size of the weight (32) is smaller than or equal to the cross-sectional size of the fiber (26).

6. Deburring tool (10) according to one of the preceding claims, **characterized in that** the guide sleeve (22) is adjustable in length, in particular telescopically adjustable in length.

7. Deburring tool (10) according to one of the preceding claims, **characterized in that** the fiber (26) is mounted in the guide sleeve (22) in a replaceable manner.

8. Deburring tool (10) according to one of the preceding claims, **characterized in that** a stop (42) is arranged on the guide section (20), which stop can perform a rotational movement relative to the guide sleeve (22), wherein the stop has a larger diameter than the largest diameter of the through hole (24).

9. Deburring tool (10) according to claim 8, **characterized in that** the stop (42) comprises a stop ring (44) and a stop sleeve (46).

10. Deburring tool (10) according to claim 9, **characterized in that** the stop ring (44) can perform a rotational movement relative to the stop sleeve (46), wherein preferably the stop sleeve (46) is mounted non-rotatably with respect to the guide sleeve (22) and the stop ring (44) is preferably mounted on the stop sleeve (46) via a rotary bearing (52).

11. Deburring tool (10) according to any one of claims 8 through 10, **characterized in that** the stop (42) and the guide sleeve (22) are displaceable relative to one another in the axial direction with respect to the axis of rotation (36).

12. Deburring tool (10) according to claim 11, **characterized in that** axial guidance of the stop sleeve (46) along the guide sleeve (22) is provided by a guide pin (50), which is arranged radially on the stop sleeve (46), and a guide slot (34), which is preferably formed in the axial longitudinal direction on the guide sleeve (22), wherein the guide pin (50) engages in the guide slot (34).

13. Method for deburring using a deburring tool (10) according to one of the preceding claims, comprising the following steps:
- inserting the deburring tool (10) into a through hole (24) from a side of the workpiece (25) opposite the opening surface (38) to be deburred, wherein at least the fiber (26) on the opening surface (38) to be deburred partially protrudes from the through hole (24),
- rotating the deburring tool (10) at rated speed, wherein the fibers (26) are caused by centrifugal force to extend away substantially at right angles relative to the guide sleeve (22),
- pulling the deburring tool (10) out of the through hole (24) during the rotational movement of the deburring tool (10), so that deburring is performed on the opening surface (38) of the through hole (24), wherein the deburring angle depends on the speed and the longitudinal movement of the deburring tool (10).

14. Method for deburring using a deburring tool (10) according to claim 13, **characterized in that**, during the rotational movement about the rotational axis (36), the fiber surface (28) of the fiber (26) comes into contact with the opening surface (38) of the through hole (24) to be deburred, wherein a deburring effect is produced by the fiber surface (28).

15. Method for deburring using a deburring tool (10) according to any one of claims 13 or 14, **characterized in that** the rotational speed of the deburring tool (10) determines the tensile stress in the fiber (26).

16. Method for deburring using a deburring tool (10) according to any one of claims 13 to 15, **characterized in that** the workpiece is a plastic, composite fiber, or lightweight panel.

## Revendications

1. Outil d'ébavurage (10) pour l'ébavurage au moins d'un perçage traversant (24) dans une pièce (25), dans lequel la surface d'ouverture (38) à ébavurer du perçage traversant (24) est agencée au niveau du côté éloigné par rapport à l'outil d'ébavurage (10), comprenant un corps de base (12) avec une tige d'outil (14) et une tête d'outil (16), dans lequel la tige d'outil (14) comprend une section de serrage (16) et la tête d'outil (16) une section de guidage (20) avec une douille de guidage (22) s'étendant le long ou parallèlement à un axe de rotation (36), dans lequel la tête d'outil (16) présente une fibre flexible (26) avec une surface de fibre (28) abrasive qui est fixée de manière inamovible ou amovible dans la douille de guidage (22), dans lequel la fibre (26) présente une longueur libre (L1) et la douille de guidage (22) une longueur (L2), dans lequel la longueur libre (L1) et/ou la longueur (L2) correspond à au moins la profondeur (T) du perçage traversant (24), **caractérisé en ce que** la fibre (26) est guidée à l'intérieur de la douille de guidage (22) le long de l'axe de rotation (36) et est agencée ainsi dans une position de repos sur l'axe de rotation (36) de l'outil d'ébavurage (10).

2. Outil d'ébavurage (10) selon l'une quelconque des revendications précédentes, **caractérisé en ce que** la fibre (26) est configurée au moins par sections comme fibre plastique, fibre de verre, fibre métallique, fibre céramique et/ou fibre de carbone.

3. Outil d'ébavurage (10) selon l'une quelconque des revendications précédentes, **caractérisé en ce que** la fibre (26) est configurée comme un faisceau de filaments individuels, c'est-à-dire comme multifilament ou comme un filament unique, c'est-à-dire comme monofilament.

4. Outil d'ébavurage (10) selon l'une quelconque des revendications précédentes, **caractérisé en ce que** la surface de fibre (28) de la fibre (26) est configurée de manière structurée ou texturée afin de fournir l'action abrasive en cas de contact avec la pièce (25).

5. Outil d'ébavurage (10) selon l'une quelconque des revendications précédentes, **caractérisé en ce qu'**un poids (32) est fixé à l'extrémité côté avant de la fibre (26), dans lequel la grandeur de section du poids (32) est de préférence inférieure ou égale à la grandeur de section de la fibre (26).

6. Outil d'ébavurage (10) selon l'une quelconque des revendications précédentes, **caractérisé en ce que** la douille de guidage (22) est réglable pour être modifiable en longueur, en particulier modifiable en longueur de manière télescopique.

7. Outil d'ébavurage (10) selon l'une quelconque des revendications précédentes, **caractérisé en ce que** la fibre (26) est montée de manière interchangeable dans la douille de guidage (22).

8. Outil d'ébavurage (10) selon l'une quelconque des revendications précédentes, **caractérisé en ce qu'**une butée (42) est agencée au niveau de la section de guidage (20), butée qui peut réaliser un mouvement de rotation par rapport à la douille de guidage (22), dans lequel la butée présente un diamètre supérieur au diamètre le plus grand du perçage traversant (24).

9. Outil d'ébavurage (10) selon la revendication 8, **caractérisé en ce que** la butée (42) présente une bague de butée (44) et une douille de butée (46).

10. Outil d'ébavurage (10) selon la revendication 9, **caractérisé en ce que** la bague de butée (44) peut réaliser un mouvement de rotation par rapport à la douille de butée (46), dans lequel la douille de butée (46) est de préférence logée sans pouvoir tourner avec la douille de guidage (22) et la bague de butée (44) est de préférence logée par le biais d'un palier rotatif (52) avec la douille de butée (46).

11. Outil d'ébavurage (10) selon l'une quelconque des revendications 8 à 10, **caractérisé en ce que** la butée (42) et la douille de guidage (22) sont mobiles l'une par rapport à l'autre dans le sens axial à l'axe de rotation (36).

12. Outil d'ébavurage (10) selon la revendication 11, **caractérisé en ce qu'**un guidage axial de la douille de butée (46) est effectué le long de la douille de guidage (22) par une tige de guidage (50) qui est agencée radialement au niveau de la douille de butée (46) et par une fente de guidage (34) qui est de préférence introduite dans le sens longitudinal axial au niveau de la douille de guidage (22), dans lequel la tige de guidage (50) s'engage dans la fente de guidage (34).

13. Procédé d'ébavurage avec un outil d'ébavurage (10) selon l'une quelconque des revendications précédentes, présentant les étapes suivantes :
- introduction de l'outil d'ébavurage (10) dans un perçage traversant (24) d'un côté opposé de la pièce (25) par rapport à une surface d'ouverture (38) à ébavurer, dans lequel au moins la fibre (26) dépasse partiellement du perçage traversant (24) sur la surface d'ouverture (38) à ébavurer,
- rotation de l'outil d'ébavurage (10) à une vitesse de rotation nominale, dans lequel les fibres (26) s'éloignent par la force centrifuge de préférence sensiblement selon un angle droit par rapport à la douille de guidage (22),
- retrait de l'outil d'ébavurage (10) du perçage traversant (24) pendant le mouvement de rotation de l'outil d'ébavurage (10), de sorte qu'un usinage d'ébavurage au niveau de la surface d'ouverture (38) du perçage traversant (24) soit provoqué, dans lequel l'angle d'ébavurage dépend de la vitesse et du mouvement longitudinal de l'outil d'ébavurage (10).

14. Procédé d'ébavurage avec un outil d'ébavurage (10) selon la revendication 13, **caractérisé en ce que** la surface de fibre (28) de la fibre (26) vient en contact avec la surface d'ouverture (38) à ébavurer du perçage traversant (24) pendant le mouvement de rotation autour de l'axe de rotation (36), dans lequel une action d'ébavurage à travers la surface de fibre (28) se produit.

15. Procédé d'ébavurage avec un outil d'ébavurage (10) selon l'une quelconque des revendications 13 ou 14, **caractérisé en ce que** la vitesse de rotation de l'outil d'ébavurage (10) détermine la contrainte de traction dans la fibre (26).

16. Procédé d'ébavurage avec un outil d'ébavurage (10) selon l'une quelconque des revendications 13 à 15, **caractérisé en ce que** la pièce est une plaque en matière plastique, en fibre composite ou de construction légère.
